(19) **Europäisches Patentamt / European Patent Office / Office européen des brevets**

(11) **EP 4 553 744 A1**

(12) **EUROPEAN PATENT APPLICATION**

(43) Date of publication:
14.05.2025  Bulletin 2025/20

(21) Application number: 24211894.1

(22) Date of filing: 08.11.2024

(51) International Patent Classification (IPC):
$G06Q\ 30/0282^{(2023.01)}$    $G06Q\ 30/0601^{(2023.01)}$

(52) Cooperative Patent Classification (CPC):
G06Q 30/0631; G06Q 30/0282; G06Q 30/0627;
G06Q 30/0629

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.11.2023  US 202318506850

(71) Applicants:
• Uniwersytet SWPS
03-815 Warszawa (PL)
• Polsko-Japonska Akademia Technik
Komputerowych
02-008 Warszawa (PL)

(72) Inventors:
• SEDEK, Grzegorz
04-736 Warszawa (PL)
• RYDZEWSKA, Klara
00-113 Warszawa (PL)
• WIERZBICKI, Adam
02-797 Warszawa (PL)
• NIELEK, Radoslaw
02-691 Warszawa (PL)

(74) Representative: Patpol Kancelaria Patentowa Sp.
z o.o.
Nowoursynowska 162J
02-776 Warszawa (PL)

(54) **A COMPUTER-IMPLEMENTED VISUAL DECISION SUPPORT METHOD AND SYSTEM FOR COMPARING PRODUCTS OR SERVICES**

(57)  A computer-implemented, compensatory choice visual decision support method and system for comparing products or services is described. The method compares attributes most compelling to the user's preferences by producing a comparison of at least two products. The method includes choosing a type of products, choosing a number of attributes to be compared, evaluating an importance for each of product attribute.

The method allows for choosing at least one product from the database and loading pre-set input data from preference elucidation module to computation and visualization module. Loading product comparison data by the computation and visualization module by retrieving a matrix of attribute values for each compared products from the database, and calculation of bars for each compared product.

Fig. 2

**Description**

**Field of the Invention**

This invention relates to computer-implemented visual decision support methods and systems for comparing products or services in a client/server environment.

**Background**

The development of the e-commerce sector in the last thirty years has increased the demand for virtual product comparison websites and tools.

For instance, WO0175729 A2 relates to a dynamic comparison module implemented as a program executing on a server (e.g., a web server) that can dynamically compare multiple products having a variety of standard and optional features. Information passed to the dynamic comparison module typically includes a target product identification (representing the main product to be compared), including the target product's configuration (e.g., optional equipment, features included) and one or more competitor product identifications. The identification can be as simple as the product model number, or can include specific optional desired features, as might be chosen by a user configuring the target product. The dynamic comparison module examines how the target product is configured, via the target product information, and any standard product information from a product feature database. The dynamic comparison module will then determine what product feature categories are included, and use the category information to assemble comparably equipped competitor products for comparison. A comparison report is generated and returned to a user.

KR20130065820 A document provides an online product comparison system and a means of minimizing the time for a buyer to purchase a product, which enables the buyer to purchase the optimal product by improving the accuracy of the buyer's product selection. The disclosed online product comparison system includes an information server storing product information and product sales state information and a code server providing code information corresponding to the sales state information and code information. The display server that displays a combination of the sales status information, displays the products and goods corresponding to the code selected by the buyer at the top, and among the products and goods placed at the top, the product corresponding to the code again selected by the buyer, and may include a site management server that selects the products and arranges them at the top level. Furthermore, in order to achieve the above, a method of comparing was presented, and said method includes the steps of collecting product information and sales status of the product, assigning a code to the collected product, and sales status information of the product. It may include displaying the sales information, the status information corresponding to the code information, and arranging the products and goods corresponding to the code selected by the buyer on top.

The discussed solution aims to minimize the time needed to select a product by displaying the different sales conditions of the product selected by the buyer on a single web page. Furthermore, the discussed solution has the effect of improving the accuracy of the product selection by displaying the products meeting the buyer's purchase conditions at the top of the website.

JP2016170738 A document discloses a product comparison system comprising a terminal device and a processing device that are communicatively connected to each other via a network. Whereby the terminal device comprises a product information input means for receiving product information input data, including individual product identification data, data representing a plurality of individual product specification items identified by the individual product identification data, and data representing specification item details; comparison specification item selection means for receiving a selection of some specification items from the multiple specification items included above; display means for displaying side by side the contents of the comparative specification items selected by these means, and the comparative data comprising the individual product identification data and the comparative specification items for the plurality of comparative individual products displayed on the display means are transmitted to the processing device, and the transmission means for transmission. The processing device comprises: receiving means for receiving the comparative data transmitted from the terminal device and comparing the individual product identification data of the multiple comparative individual products contained in the comparative data received by the receiving means with the items of the comparative specification; storage means for storing performance trend data; new individual products other than the multiple comparative individual products being compared at the end device using the comparative trend performance data stored in the storage means; first determining means for determining at least one of the new specification item, other than the comparison specification item, and at least one new individual product and specification item determined by the determining means, to the end device. Moreover, said input data comprises numerical data representing the degree of importance of the comparison specification items compared in the end device. A customer who is comparing products via a terminal device may enter numerical data representing the validity of the comparative specification items being compared on the terminal device, or the comparative specifications displayed side-by-side on the display. A numerical value can be assigned according to the order in which the item is displayed.

Unfortunately, the ability to perform cross-product comparisons proposed by known solutions is generally limited to pure numerical data, which requires a certain degree of user proficiency in the products being compared and poses a challenge for users with cognitive limitations, especially older people. The most widely used product comparison method is a product comparison table, which is ubiquitous in e-commerce websites (Moran, 2017). Research in information technology has shown that the usage of product comparison tables leads to considering a larger share of nondominated alternatives (that is, alternatives that are at least as good as all others on at least one attribute) in the set of alternatives for purchase, as well as an increased probability of a nondominated alternative being selected for purchase (Häubl, 2000). The comparison of several nondominated products must involve a formulation (at least at the implicit or tacit level) of customer preferences that allow customers to choose one of the compared products. Product comparison tables do not support preference elicitation and do not make use of a user's preferences to support the user's decision.

An additional aspect of product comparison tables underlined by Kate Moran in the report of Nielsen Norman Group (2017) is that careful inspection of a small set of alternatives with their original values helps customers engage in *compensatory* decision-making. Citing this report, 'People might accept a negative attribute as a tradeoff for a positive one. For example, a user researching a new laptop might be willing to consider a heavier computer if it has better battery life and computing power (Moran, 2017). Compensatory decision-making once again depends on the formulation of customer preferences. However, that in itself is not enough. Compensatory decision-making is difficult for customers because it requires computations or judgmental assessments that combine multiple features for each product being considered. An example of a compensatory decision-making strategy is a weighted-additive strategy in which a weight (relative importance) is assigned to each attribute. Weights for all attributes are an expression of the customer's preferences and allow to choose the product that is most suited to those preferences. Unfortunately, research (Song et al. 2006, Rydzewska et al., 2021) indicates that the use of such a strategy is so difficult for customers that they frequently make mistaken choices (20-40% of users, depending on their age). Older users are much more likely to make wrong choices for product comparisons that require the use of compensatory strategies. Thus, it follows from previous research that product comparison tables can increase the likelihood of producing comparisons that require compensatory decision-making, and are too difficult for users, who make wrong choices. Product comparison tables can be thought of as being victims of their own success.

Accordingly, it is desirable to have user-friendly, visual decision support methods and systems for comparing products in client/server environments that can assist users to better understand the result of the comparison and to choose a product that best meets their personalized preferences. The decision support method should not require computations or numerical comparisons; it would be best, if the method would allow a user to make a correct decision based on purely visual cues. What is also important, the construction of such visual cues should be intuitively understood by the users.

Häubl, G., & Trifts, V. (2000). Consumer decision making in online shopping environments: The effects of interactive decision aids. Marketing Science, 19(1), 4-21.

Moran, K. (2017). Comparison tables for product, services, and features. Nielsen Norman Group. Available online at the nngroup.com website.

Rydzewska, K., Pawlowska, J., Nielek, R., Wierzbicki, A., & Sedek, G. (2021). Cognitive limitations of older e-commerce customers in product comparisons tasks. IFIP TC13 Conference on Human-Computer Interaction [Interact], Proceedings, Part III, 646-656.

Song, J., Jones, D., & Gudigantala, N. (2007). The effects of incorporating compensatory choice strategies in Web-based consumer decision support systems. Decision Support Systems, 43(2), 359-374.

**Summary**

The essence of our invention is the presentation of visual "smart bars" that are the intuitive embodiment of correct multi-attribute choice based on the original sequence of human-computer interactions.

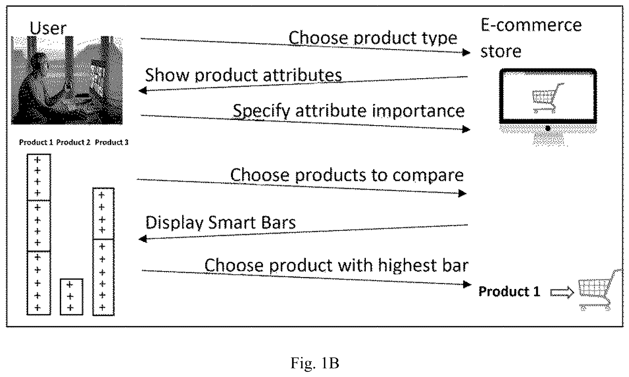

That is, in one embodiment, a method of visual, computerized decision support that uses a unique sequence of interactions with the e-commerce customer is presented. The embodiment is summarized in Scheme 1 depicted in Fig. 1B.

In Scheme 1, the user is a customer of the e-commerce store.

As shown in Scheme 1:

1. The customer chooses a product type that determines the product attributes (features) that will be used in a comparison. Each attribute used in the comparison must be able to be evaluated on an ordinal or cardinal scale;

2. Preferences of the customer are obtained in the form of an importance value $\alpha_i$ for each product attribute $1 \leq i \leq k$. Importance values are visualized in the form of blocks that differ in sizes, for example, from 1 ($\alpha_i = 1$, meaning lowest importance of attribute i) to 6 ($\alpha_i = 6$, meaning highest importance of attribute i).

3. The customer chooses a set of n>1 products for comparison.

4. A standard product comparison table can be shown to the customer based on attribute values for the chosen products that are stored in the server's database. However, our invention prioritizes the use of the importance values. In addition to the standard product comparison table, we propose to visualize Smart Bars - a representation of the customer's preferences towards the products chosen for comparison. We calculate Smart Bars using the importance values of attributes specified by the customer and the attribute values of products for the comparison stored in the form of a k by n matrix $\mathcal{M}\,[i, j]$, wherein said matrix comprises all k attribute values for the chosen product and a row in the matrix comprises values of specific attributes for all n compared products;

5. Smart Bars are calculated for each compared product,

wherein each bar of a product is a set of blocks that correspond to the attributes for which the product has the best values among all compared products,
wherein each block in the bar has two dimensions: width and height,
wherein the height of the block is determined by the importance value of the corresponding attribute,
wherein each Smart Bar is a set of blocks, each drawn subsequent on top of a previous block, starting from the same level,
wherein the height of each Smart Bar is equal to the sum of attribute importance values as chosen by the customer in the beginning of the interactive sequence.

6. After Smart Bars are displayed to the customer, the customer only needs to select the product with the highest Smart Bar. Our research has shown that this visual decision support method reduces the possibility of wrong product choice by 25%-30% (by 25% for younger customers and by over 30% for middle-aged and older customers).

Accordingly, one aspect of the present invention provides a computer-implemented, compensatory choice decision support method for choosing products with attributes most compelling to the user's preferences by producing a comparison of at least two products, each with at least k>1 attributes, the method is executed on a server-based system with a database connected via a network to a client host and browser, the method comprising following steps:

a) choosing a type of products to be compared deposited within database;
b) retrieving a list of k>1 product attributes stored in the database, wherein said attributes are quantifiable on ordinal or cardinal scales;
c) evaluating an importance $\alpha_i$ for each of product attribute $1 \leq i \leq k$ on an ordinal or cardinal scale;
d) choosing n>1 products from the database of the product type chosen in the step a);
e) loading preset input data from preference elucidation module to computation and visualization module, wherein said input data comprises products to be compared along with chosen attributes and designated importance $\alpha_i$;
f) loading product comparison data by the computation and visualization module by retrieving a k by n matrix $\mathcal{M}\,[i, j]$ of attribute values for each compared products from the database, wherein said matrix comprises all k attribute values for chosen product and a row in the matrix comprises values of specific attribute for all n compared products;
g) calculation of bars for each compared product;

wherein each bar of a product is a set of blocks that correspond to the attributes for which the product has best values among all compared products,
wherein each block in the bar has two dimensions: width and height,
wherein the height of the block is determined by the importance value of the corresponding attribute and wherein the smallest (y) value corresponds to the lowest importance of attribute and highest (y) value corresponds to the highest importance of attribute;

h) generating a visualization of product comparison in the form of bars in the output window and presenting it to the user;

wherein each bar is a set of blocks, each drawn subsequent on top of previous block,

wherein the height of each bar is equal to sum of attribute importance values.

Preferably, said scale is an ordinal 6-point scale wherein, a value of 1 is interpreted as the lowest importance, while a value of 6 is the highest importance.

Preferably, the method, according to the invention further comprises step c') comprising storing the importance values for each attribute in the database.

Preferably, in step c) the chosen importance values ($\alpha i$) are visualized and presented to the user in the form of blocks of different sizes.

Preferably, for each product j, the bar is determined by a set of blocks of width x and height y, wherein: $B_j = \{(x, y): x = 3 * s, y = \alpha_i * s$ *for each* $i \in S_j\}$, wherein $S_j$ is the set of attributes i for which product j is the best among the compared products.

Preferably, said blocks are drawn one on another from the bottom of the output window.

Preferably, in step d) an additional input data is loaded to computation and visualization module, wherein said additional input data comprises width of the bars, distance between bars and width of the output window for displaying the bars.

Preferably, product comparison in step f) is calculated by following formula:

for each attribute, choose the products in the matrix that have the best values (highest or lowest, depending on scale):

for $1 \leq i \leq k$, $V_i = \{v: 1 \leq v \leq n$ and $\mathcal{M}[i, v] = max_j(\mathcal{M}[i, j])$ *and scale i is maximized*$\}$

for $1 \leq i \leq k$, $V_i = \{v: 1 \leq v \leq n$ and $\mathcal{M}[i, v] = min_j(\mathcal{M}[i, j])$ *and scale i is minimized*$\}$

for each product (j), find the set of attributes i for which (j) is in Vi;

for $1 \leq j \leq n$, $S_j = \{i: 1 \leq i \leq k$ *and* $j \in V_i\}$

for each product, determine the Bar which is a set of blocks of sizes (x, y):

$$B_j = \left\{(x, y): x = 3 * s, y = \alpha_i * s \; for \; each \; i \in S_j\right\}.$$

Preferably, in that in step h) the visualization of product comparison in the form of bars generated in the output window further comprises additional data comprising attribute name, attribute importance level, numerical data of parameter chosen as an attribute to be compared, text data describing the parameter chosen as attribute to be compared, combination thereof.

Preferably, said additional data are presented to the user in a table.

In another aspect of the invention, a decision support system for performing a compensatory choice decision support method for choosing products with attributes most compelling to the user's preferences according to the invention by producing a comparison of at least two products, each with at least k>1 attributes, wherein said system is connected with a database via network to a client host and browser is proposed, wherein said system comprise a server, preference elucidation module and computation and visualization module, characterized in that

browser is configured to display products, attribute values and bars obtained from the server and allow users to interactively choose products and attribute importance values, communicating user choices to the server;

client host is a computer or mobile device (smart phone, tablet etc.) connected to the Internet, and executing the browser as an application;

server is configured to communicate with the browser using the network protocol and to use the preference elucidation module and the computation and visualization module in order to prepare appropriate responses in the form of a message containing data and metadata conforming to the agreed format to be communicated to the browser;

database is configured for storing an underlying dataset comprising plurality of data on products, product attributes, product attributes importance;

preference elucidation module is configured to interactively obtain the evaluation of importance of the product attributes on a scale from the user, and to store this data in the database;

computation and visualization module is configured to calculate the Smart Bars used in product comparison, generate a visualization of Smart Bars used in product comparison.

## BRIEF DESCRIPTION OF THE DRAWINGS

The invention together with the above and other objects and advantages will be best understood from the following detailed description of embodiments of the invention shown in the accompanying drawings, wherein:

Fig. 1A illustrates an exemplary product comparison table known from prior art;

Fig. 1B illustrates an overview scheme of a method according to the invention;

Fig. 2 illustrates a schematic view of the system according to invention;

Fig. 3 illustrates the assigning the importance values to exemplary product attributes according to step c) of the method of invention, wherein said exemplary product comprises washing machine;

Fig. 4 illustrates a block chart of calculation product comparison by the algorithm of computation and visualization module in step e) of method according to invention;

Fig. 5 illustrates exemplary bars generated by the method of invention for three compared products, wherein the bars are oriented vertically, and an explanation of the attribute name and value is displayed next to a selected block;

Fig. 6 illustrates exemplary placement of bars generated by the method according to invention next to product comparison table;

Fig. 7 illustrates exemplary bars generated by the method of invention for three compared products, wherein the bars are oriented horizontally, and an explanation of the attribute name and value is displayed next to a selected block;

Figs. 8A and 8B illustrate the results of the intervention study concerning effectiveness of method and system according to invention, wherein Fig. 8A relates to a proportion of correct decisions, Fig. 8B relates to a time of decision making;

Fig. 9 illustrates the interaction pattern between a user and an e-commerce store based on a server, according to steps a)-c) of the method of invention, wherein the products and values are as in Example 1;

Fig. 10 illustrates the interaction pattern between a user and an e-commerce store based on a server, according to steps d)-g) of the method of invention, wherein the products and values are as in Example 1;

Fig. 11 illustrates the interaction pattern between a user and an e-commerce store based on a server, according to steps d)-g) of the method of invention, wherein the attribute importance values are as in Example 1, but the user compares new products with different attribute values, resulting in different bars and a different product selection;

Fig. 12 illustrates the interaction pattern between a user and an e-commerce store based on a server, according to steps a)-c) of the method of invention, wherein the products and values are as in Example 1, but the attribute importance values chosen by the user are different, as in Example 4;

Fig. 13 illustrates the interaction pattern between a user and an e-commerce store based on a server, according to steps d)-g) of the method of invention, wherein the products and values are as in Example 1, but the attribute importance values chosen by the user are different, as in Example 4, leading to different heights of Smart Bars and choice of a different product; and

Fig. 14 illustrates the application of Smart Bars to the selection of hotels in a mobile device. The hotels are compared using five attributes: price, hotel standard, visitor ratings, distance to beach and internet access. Three hotels are compared using Smart Bars in the figure. Hotel 3 is the best choice.

## DETAILED DESCRIPTION OF INVENTION

Reference will now be made in detail to the present embodiments of the invention, examples of which are illustrated in the accompanying figures. Wherever possible, the same reference numbers are used in the figures and the description to refer to the same or like parts.

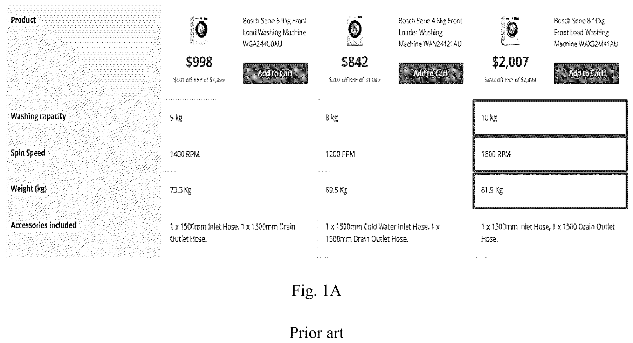

Reference is now made to Fig. 1A. Fig. 1A illustrates an exemplary product comparison table known from prior art. As shown in Fig. 1A, a comparison table contains pure numerical undiscussed data, which requires a certain degree of user proficiency in the products being compared and poses a challenge for older people.

Thus, in one aspect, the invention relates to a user-friendly computer-implemented decision support method for producing a comparison of at least two products. The goal of the method is to support the decision of a customer who compares products in a product comparison table. This goal is achieved by visually presenting the utility of products in a product comparison table, based on the preferences specified by the user. The essence of the proposed method lies in the visual presentation of both the attribute preferences, and of the utility of the compared products. Fig. 1B shows an overview schema of one embodiment of the system, discussed above.

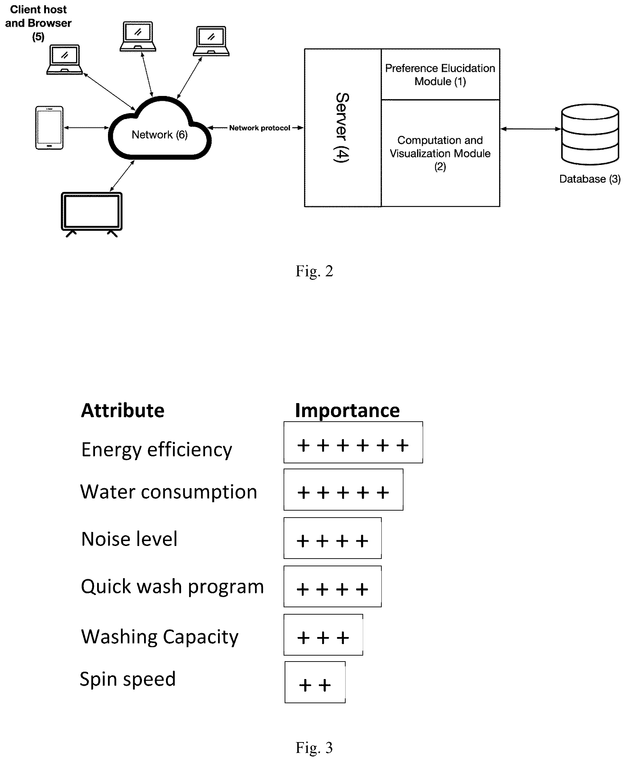

Reference is now made to Fig. 2. Fig. 2 illustrates a schematic view of the system according to the invention comprising server 4, preference elucidation module 1, computation and visualization module 2 and a database 3. Furthermore, said system is connected via a network to the client host and browsers 5. The database 3 is configured for storing an underlying dataset comprising plurality of data on products, product attributes, product attributes importance; browser 5 is configured to display products, attribute values and bars obtained from the server 4 and allow users to interactively choose products and attribute importance values, communicating user choices to the web server 4; web server 4 is configured to communicate with the browser 5 using the network protocol and to use the preference elucidation module 1 and the computation and visualization module 2 in order to prepare appropriate responses in the form of a message containing data and metadata conforming to the agreed format to be communicated to the browser; preference elucidation module 1 is configured to interactively obtain the evaluation of importance of the product attributes on a scale from the user, and to store this data in the database 3; computation and visualization module 2 is configured to calculate the bars used in product comparison, generate a visualization of bars used in product comparison.

In one embodiment, the proposed method is executed on a server-based system connected via network 6 with a database 3 to a client host and browser 5.

In one embodiment, the method of invention can be implemented using server based or client based application technology, such as Javascript, PHP, Python, ASP.Net, Kotlin, Swift, or any other Web application development technology or native application development technology. The user interface of the method of invention will be the browser 4. The input data provided by the user will be sent through the network 6 using the network protocol to the Web server, which will store the required information in a database 3. The preference elucidation module and the computation and visualization module may be implemented on the same host as the server, or on a separate host, as part of an application server that will communicate with the server. The final output of the proposed method is computed by the computation and visualization module and is communicated to the server. The Web server sends the output using the network protocol to the client.

The term "user" or "users" used herein relates to customers of e-commerce stores, or users of price comparison Websites. The proposed invention is especially designed to support users who are elderly, but can be of use to people of all ages. The term "e-commerce store" used herein refers to an application used to provide the service of a store (browsing, selecting, and purchasing of products or services) on a server connected to the Internet. While the method of invention can be used both in a single e-commerce store, and in a Website that aggregates offers from multiple stores and allows users to compare prices and product attributes. It is precisely the functionality of product comparison that is supported by the method of invention.

The method of invention comprises following steps: a) choosing products to be compared deposited within database 3, wherein number of products j is n>1; b) choosing a number of attributes to be compared from a list of k>1 product attributes stored in the database 3, wherein said attributes are quantifiable on ordinal or cardinal scales; c) evaluating an importance $\alpha_i$ for each of attribute $l \leq i \leq k$ on a ordinal or cardinal scale; d) loading preset input data from preference elucidation module 1 to computation and visualization module 2, wherein said input data comprises products j to be compared along with chosen attributes and designated importance $\alpha_i$; e) loading product comparison data by the computation and visualization module 2 by retrieving a k by n matrix M[i,j] of attribute values for each compared products j from the database 3, wherein said matrix M comprises all k attribute values for chosen product j and a row in the matrix M comprises values of specific attribute for all n compared products j; f) calculation of bars $B_j$ for each compared product j, wherein each bar $B_j$ of a product j is a set of blocks that correspond to the attributes for which the product j has the best values among all compared products, wherein each block in the bar $B_j$ has two dimensions: width x and height y, wherein the height y of the block is determined by the importance value of the corresponding attribute $\alpha_i$; g) generating a visualization of product comparison in the form of bars $B_j$ in the output window and presenting it to the user; wherein each bar $B_j$ is a set of blocks, each drawn subsequent on top of previous block; wherein the height of each bar $B_j$ consists of sum of attribute importance values.

In an embodiment, the method of invention in step b) requires input data in the form of a list of k>1 product attributes (features or properties), which can be different for various types of products j (for example, washing machines will have different attributes from personal computers). For each attribute, we require the knowledge of whether the values of this attribute are comparable (on a cardinal or ordinal scale), and whether the attribute should be maximized (the more, the better) or minimized (the less, the better) in the product comparison process. Product attributes will be stored in a database 3 along with the required information about each attribute and associated product j.

In an embodiment compared products are washing machines, and product attributes may comprise, for example: [("Energy efficiency", "max"), ("Water consumption", "min"), ("Noise level", "min"), ("Quick program", "max"), ("Washing capacity", "max"), ("Spin speed", "max")].

In an embodiment, the method of invention is carried out in two modules of the system of invention, wherein steps a-c) are implemented into the Preference Elucidation module 1 and steps d-f) are implemented into the Computation and Visualization module 2.

In step a), the user chooses which and how many products will be used for comparison purposes. Step b) comprises the Preference Elucidation. In this step b), the user can elucidate her/his preferences through an interactive procedure. Reference is now made to Fig. 3, which illustrates the assigning the importance values to exemplary product attributes according to step c) of the method of invention, wherein said exemplary product comprises washing machine. In this exemplary embodiment, the attributes of a chosen product type (for example, of washing machines as shown in Fig. 3) are shown to the user. The user may specify his preferences by evaluating the importance of product attributes. Product attributes are presented in a table, and the user can choose the importance value next to each attribute, represented as a certain number of "pluses" (for example from 1 to 6). Ties are allowed.

In Fig. 3 "plus signs" are used as examples of product attribute importance visualization. However, other symbols may be used instead, for example stars. It is important for the method of invention that the importance values be countable and visually represented as rectangles (blocks). For each attribute $1 \leq i \leq k$, this step will obtain an importance of this attribute, $\alpha i$, evaluated by the user on a scale. In one embodiment a scale of 1-6 is used, however a similar, cardinal scale, for example, the Likert scale may also be employed. Wherein, a value of 1 is interpreted as the lowest importance, while a value of 6 - as the highest importance. After the user chooses importance values for each attribute of the chosen product type, the importance values can be saved and stored in the database 3.

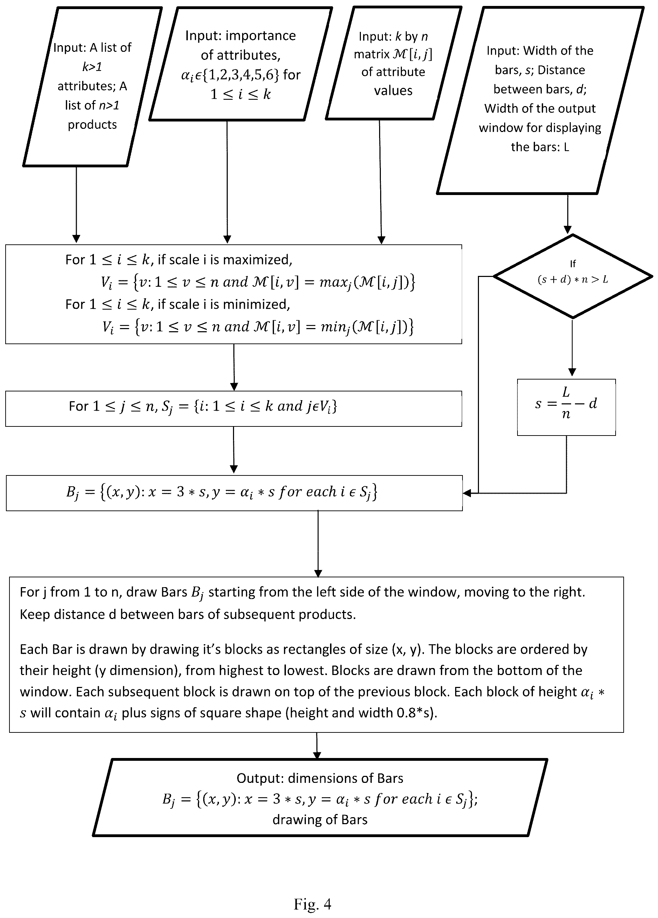

Next, in the d) step of the method of invention, preset input data is loaded from preference elucidation module 1 to computation and visualization module 2, wherein said input data comprises products j to be compared along with chosen attributes and designated importance. Next, in step e) the algorithm of the computation and visualization module 2 calculates product comparison, and in step f) generates a visualization of this comparison to the user as shown in Fig. 4.

Wherein steps e-f) of the claimed method are an extension of the currently used product comparison functionality, and begins when a user chooses a set of products for comparison. This step requires input data in the form of a standard product comparison table used in may e-commerce sites. In the case of the method according to invention, the attributes on the table must be limited to those that can be expressed on ordinal or cardinal scales. However, this concerns many attributes - for instance, the attribute "processor type" of a laptop could be compared on an ordinal or even cardinal scale using benchmark values.

The product comparison table can be represented as a list of n products and a k by n matrix M [i, j] of attribute values: for each product, a column in the matrix includes all k attribute values for this product, and a row in the matrix includes values a specific attribute for all n products. Every product included in the list of products will have an associated Bar.

The computation of Bars' dimensions starts with finding, for each product attribute, of the best value for this attribute in the current product comparison table. For each attribute, the product that has the best value of this attribute will be associated with the value of this attribute's importance. The Bar of this product will contain the importance value of this attribute. A Bar of a product included in the product comparison table can be represented as a set of importance values of the attributes for which this product has the best values in the comparison table. In the case of ties (two or more products have the same, best value for an attribute), the Bars of all tied products will include the importance of this attribute unless the tie includes all products in the comparison table - in such a case, this attribute can be ignored.

The computation of Bars dimensions is calculated by the computation and visualization module 2 as presented in Fig. 4.

Once the best values have been found for all product attributes, and the importance values of the attributes have been assigned to the correct the Bars, the computation of Bars dimensions is complete.

Next, visualization of product comparison in the form of bars is generated in the output window and presented to the user, wherein each bar is generated for one of n compared products; wherein each bar is a set of blocks, each drawn subsequent on top of previous block; and wherein the height of each bar consists of sum of attribute importance values.

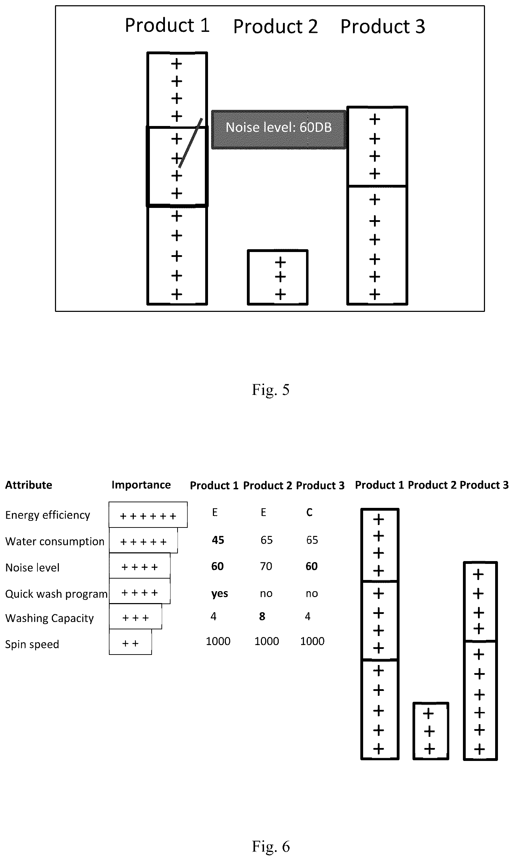

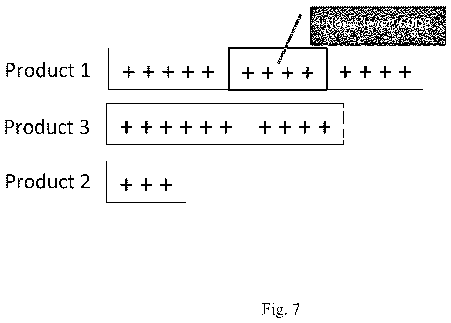

This step of the method, according to invention can be implemented in various ways. For example, blocks may be drawn horizontally, or vertically. If Bars are drawn vertically, the height of the Bars should be equal to the sum of the attribute importance values. In this case, Bars can be visualized by drawing blocks vertically and stacking them on top of each other, as shown in Fig. 5. If Bars are drawn horizontally, then their length should be equal to the sum of attribute importance values, as shown in Fig. 7.

Bars can be visualized (drawn) using client-side application development technology such as JavaScript, CSS, Kotlin, Swift, or using server-side technology such as Python, PHP, ASP.NET. Drawing Bars requires the following additional input data: width of the bars, s; distance between bars, d; width of the output window for displaying the bars: L.

Each Bar is drawn by drawing its blocks as rectangles of size (x, y). The blocks are ordered by their height (y dimension), from highest to lowest. Blocks are drawn from the bottom of the window. Each subsequent block is drawn on top of the previous block. Each block of height $\alpha_i$ *s will contain $\alpha_i$ plus signs of square shape (for example, height and width 0.8*s).

Drawn blocks can be interactively selected by the user, and upon selection, will display information about the attribute name and value associated with the selected block. Recall that each Bar $B_j$ of a product j is a set of blocks that correspond to the attributes for which the product j has the best values among all compared products. So, for each block in this set, the name and value of the corresponding attribute for product j are known.

In the preferable embodiment Bars will be drawn in a separate window (pane) that can be placed next to a standard, numerical comparison table, as shown in example illustrated in Fig. 6. In the preferable embodiment the initial window for specifying product attribute importance values (example of which is shown in Fig. 3) can also be placed next to the product comparison table.

Bars can also be drawn horizontally, with products aligned in rows instead of columns, as shown in example illustrated in Fig. 7.

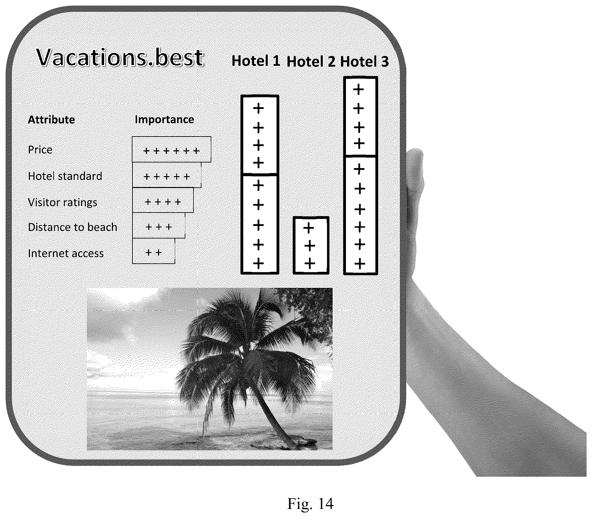

A visualization of the application of Smart Bars is presented in Fig. 14. The figure shows the application of Smart Bars for the comparison of hotels by an online site that sells holidays (such as Booking.com, Tripadvisor.com, Trivago.com). The user accesses the service using a mobile device. Smart Bars are shown without the product comparison matrix, simplifying and streamlining the user's choice.

**First Example**

The computer-implemented, compensatory choice decision support method for choosing products with attributes most compelling to the user's preferences according to the invention produces a comparison of at least two products, each with at least k>1 attributes. Wherein said method is executed on a server-based system with a database communicating via a network with a client host.

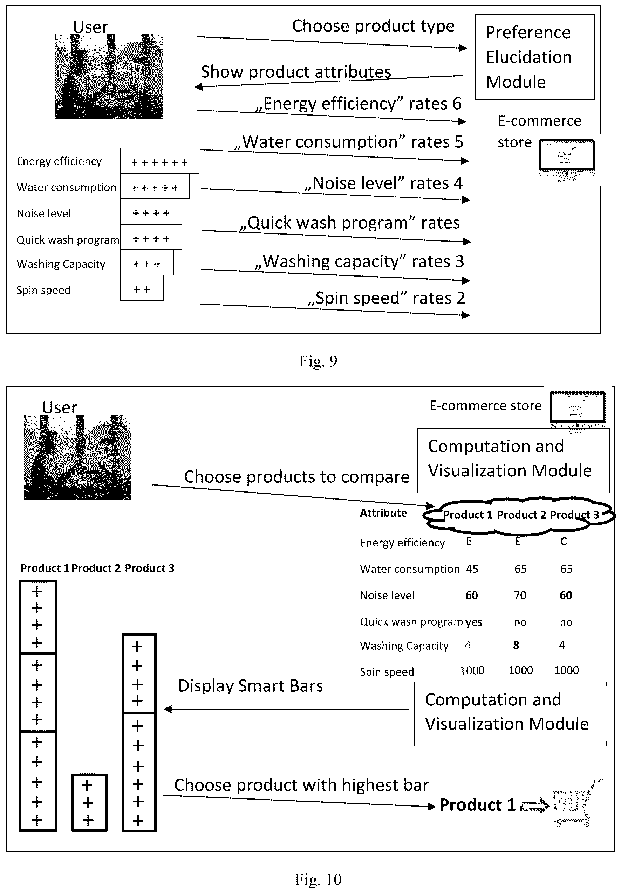

In this example, the method of invention was used to compare three products. The method follows a pattern of interaction as described on Fig. 9. and Fig. 10.

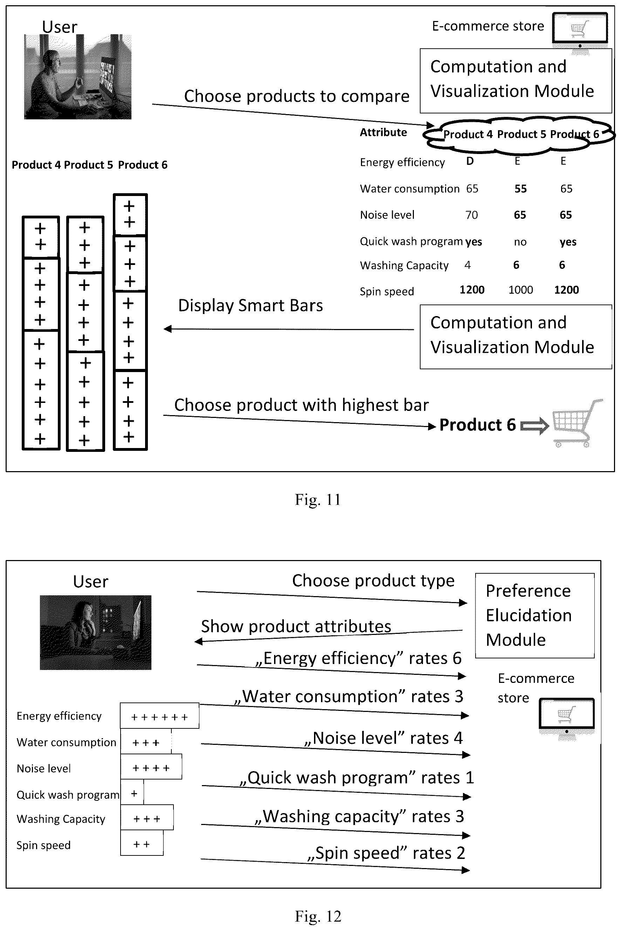

The user chooses a product type. Next, the e-commerce store retrieves and sends the product attributes to the user. For each product attribute, the user chooses an importance value, for example, by choosing the size of the block next to the name of the attribute, visualized as blocks filled with various numbers of plus signs (other characters or icons can be used, as well). The user sends the chosen importance values to the preference elucidation module. The preference elucidation module stores the importance values in the database. Said importance values can be used for multiple comparisons of products of the same type, as shown in example in Fig. 11. The preference elucidation module should allow the user to change or delete stored importance values.

After choosing the importance values of attributes, the user chooses a set of three products to compare. The e-commerce store retrieves the values of the attributes of the three products and displays a standard product comparison table to the user. However, our method prioritizes the importance values chosen by the user over the product attribute values. Based on the product attribute values and the importance values, our method displays Smart Bars to the user. The Smart Bars of a product are composed of the blocks of the attributes for which this product is best among the compared products. The user can choose the product with the highest Smart Bar. Our method guarantees that this product has the highest sum of importance weights specified by the user among all products in the comparison.

Said method is executed on a server-based system with a database connected to a client host and browser schematically illustrated in Fig. 2.

The method of invention comprises the following steps:

***Step A) choosing a type of products to be compared deposited within database 3***

The customer or user chooses a product type that determines the product attributes (features) that will be used in a comparison. However, each attribute used in the comparison must be able to be evaluated on an ordinal or cardinal scale. In this non-limiting example, a washing machine was chosen as the product type.

***Step B) choosing a number of attributes to be compared from a list of k>1 product attributes stored in the database 3, wherein said attributes are quantifiable on ordinal or cardinal scales***

In this example, following k =6 attributes were chosen from the database 3: energy efficiency, water consumption, noise level, quick wash program, washing capacity and spin speed.

***Step C) evaluating an importance ($\alpha_i$) for each of attribute $1 \leq i \leq k$ on an ordinal or cardinal scale***

In this step, k=6 of chosen attributes are presented to the user by the preference elucidation module 1 of system according to invention.

The user may now specify his preferences by evaluating the importance of product attributes. In this exemplary embodiment, product attributes are presented in a table, and the user can choose the importance value next to each attribute, represented as a certain number of "pluses" in 1 to 6 ordinal scale, wherein ties are allowed. Wherein, a value of 1 is interpreted as the lowest importance, while a value of 6 - as the highest importance.

Importance values can also be visualized in the form of blocks that differ in sizes, for example, from 1 ($\alpha i$ =1, meaning lowest importance of attribute i) to 6 ($\alpha i$ =6, meaning highest importance of attribute i).

As shown in Fig. 3 "plus signs" are used as examples of product attribute importance visualization. However, other symbols may be used instead, for example stars. For each attribute (k=6), this step will obtain an importance of this attribute, $\alpha i$, evaluated by the user on a scale.

After the user chooses importance values for each attribute of the chosen product type, the importance values can be saved and stored in the database 3.

### Step D) choosing n>1 products j from the database 3 of the product type chosen in the step a),

In this example, 3 models of washing machines were chosen as products j to be compared, wherein n = 3. Note that the user can only select products of the same type (that have the same attributes used for comparison).

### Step E) loading preset input data from preference elucidation module I to computation and visualization module 2,

Wherein said input data transferred from preference elucidation module 1 to computation and visualization module 2 comprises products j to be compared (i.e. washing machines) along with chosen attributes and designated importance $\alpha_i$.

### Step F) preparation (loading) of product comparison matrix by the computation and visualization module 2 by retrieving a k by n matrix $\mathcal{M}$ [i,j] of attribute values for each compared products j from the database, wherein said matrix M comprises all k attribute values for chosen product j and a row in the matrix M comprises values of specific attribute for all n compared products j

Please note that a standard product comparison table can be shown to the customer based on attribute values for the chosen products that are stored in the server's database. However, the method of invention prioritizes the use of the importance values.

### Step G) calculation of bars $B_j$ for each compared product by the computation and visualization module 2

The step of calculation of product comparison is summarized in Fig. 4. In this non-limiting example, the input data to the algorithm of computation and visualization module 2 consists of the following:

1) A list of *k>1* attributes (herein k = 6) that are quantifiable on ordinal scale will be used to compare products. However, cardinal scale can also be used.
Regardless of the selected scale, for each scale, we need information on whether it is maximized (the more, the better), or minimized (the less, the better). For example: [("Energy efficiency", "max"), ("Water consumption", "min"), ("Noise level", "min"), ("Quick program", "max"), ("Washing capacity", "max"), ("Spin speed", "max")]
2) For each attribute $1 \leq i \leq k$, an importance of this attribute, $\alpha_i$, evaluated by the user on a scale of 1-6 (however a similar, cardinal scale, for example the Likert scale can be used). A value of 1 is interpreted as the lowest importance, while a value of 6 - as the highest importance
3) A list of n (herein n = 3) products that will be compared by the user
4) A *k* by *n* matrix $\mathcal{M}$ [i, j] of attribute values: for each product, a column in the matrix includes all k attribute values for this product, and a row in the matrix includes values a specific attribute for all n products
5) Width of the bars, s (herein s = 200 pixels)
6) Distance between bars, d (herein d = 100 pixels)
7) Width of the output window for displaying the bars: L (herein L = 800 pixels)

In this non limiting example, Algorithm comprises:

$$s = \frac{L}{n} - d$$

1) If (s + d) * *n* > L, then
2) For each attribute, choose the products in the matrix that have the best values (highest or lowest, depending on scale):

For $1 \leq i \leq k$, $V_i = \{v: 1 \leq v \leq n$ and $\mathcal{M}$ $[i, v] = max_j(\mathcal{M}$ $[i, j])$ and scale i is maximized$\}$
For $1 \leq i \leq k$, $V_i = \{v: 1 \leq v \leq n$ and $\mathcal{M}$ $[i, v] = min_j(\mathcal{M}$ $[i, j])$ and scale i is minimized$\}$

3) For each product j, find the set of attributes i for which j is in $V_i$:
For $1 \leq j \leq n$, $S_j = \{i: 1 \leq i \leq k$ and $j \in V_i\}$
4) For each product j, determine the Smart Bar which is a set of blocks of sizes (x, y):

$B_j = \{(x, y): x = 3 * s, y = \alpha_i * s$ for each $i \in S_j\}$, wherein $S_j$ is the set of attributes i for which product j is the best among the compared products.

The following output data is provided:

1. Bars, $B_j$, for each product j, wherein for each product in the product comparison, the Bar is a set of blocks. Each block of the Bar corresponds to an attribute of the compared products and has a height that is determined by the importance of the attribute as chosen by the user, wherein the smallest y value corresponds to the lowest importance of attribute and highest y value corresponds to the highest importance of attribute. The Bar of each product is the set of blocks that correspond to the attributes for which this product is the best among the compared products. Thus, although in this exemplary embodiment x = 3 * s, generated bars can have a different width, such as 2*s or 2.5*s.

***Step H) generating a visualization of product comparison in the form of bars $B_j$ in the output window and presenting it to the user***

In this example, Bars are visualized by drawing them vertically and stacking them on top of each other as shown in Fig. 5. For j from 1 to n, draw Smart Bars $B_j$ starting from the left side of the window, moving to the right. Keep distance d between bars of subsequent products.

Bars can be visualized (drawn) using JavaScript technology in the Web browser, or using server-side technology. Drawing Bars requires the following additional input data: width of the bars, s; distance between bars, d; width of the output window for displaying the bars: L.

Each Bar is drawn by drawing its blocks as rectangles of size (x, y). The blocks are ordered by their height (y dimension), from highest to lowest. Blocks are drawn from the bottom of the window. Each subsequent block is drawn on top of the previous block. Each block of height $\alpha\_i*s$ will contain $\alpha i$ plus signs of square shape (for example, height and width 0.8*s).

In the preferable embodiment Bars will be drawn in a separate window (pane) that can be placed next to a standard, numerical comparison table as shown in example illustrated in Fig. 6. In the preferable embodiment the initial window for specifying product attribute importance values (example of which is shown in Fig. 3) can also be placed next to the product comparison table.

**Second Example**

In this example, the decision support system according to invention is illustrated in Fig. 2. The system, according to the invention, is connected with a database 3 to a browser in the form of a mobile application launched on a mobile device (the client host) 5 via network 6, comprising server 4, preference elucidation module 1 and computation and visualization module 2. The preference elucidation module 1 and the computation and visualization module 2 can be implemented using server-based or client-based Web application technology or Native application technology, such as Javascript, PHP, Python, ASP.Net, Kotlin, Swift, or any other Web application development technology or Native application technology, on the same host as the server, or on a separate host, as part of an application server that will communicate with the server. The preference elucidation module 1 and the computation and visualization module 2 can also be implemented on the client host.

The steps A-G of the previous example (Example 1) can be implemented in the proposed system as follows:

***Step A. Choosing a type of product for comparison***

In this step, the user chooses a type of product to be compared from a list of products displayed in the user's browser. The computation and visualization module 2 retrieves product data from the database, in response to the client's request. The computation and visualization module creates a webpage in HTML that includes the list of products to be chosen by the user and returns the webpage to the server, which sends the webpage to the browser 5. The browser displays the webpage, allowing the user to select products.

Once the user selects the products to be compared, information about this selection is sent by the browser to the server using the network protocol. Depending on the implementation, the server may store this information in the database or keep it in main memory.

### Step B. Choosing k>1 product attributes for comparison

In this step, the user investigates a type of product (for example, a washing machine), and chooses attributes to be used in the product comparison from a list of attributes displayed in the user's browser. The first step is the choice of a type of product by the user. The user's browser sends information about the chosen product type and obtains attribute data from the server using the network protocol. After receiving the browser's request that contains information about the chosen product type, the server forwards this information to the preference elucidation module (1). The preference elucidation module retrieves attribute data from the database (3). Attribute data includes information about the attributes scale (whether it is ordinal, cardinal, or incomparable, and whether it is maximized or minimized. Attributes of an incomparable scale cannot be used in our method.). The preference elucidation module creates a webpage in HTML that includes the list of attributes to be chosen by the user and returns the webpage to the server. The server sends the webpage to the browser (5). The browser displays the webpage, allowing the user to select attributes. Once the user selects k attributes to be used in the comparison (for example, k=7), information about this selection is sent by the client to the server using the network protocol. Depending on the implementation, the preference elucidation module may store this information in the database or keep it in main memory.

Note that this step of the proposed method may be executed by the owner of the e-commerce platform, who may preset default attributes to be used in a comparison of products of a given type. In this case, the user does not need to select the attributes, but proceeds directly to step B.

### Step C. Evaluating the importance ($\alpha_i$) for each of attribute $1 \leq i \leq k$ on a ordinal or cardinal scale

In this step, k=7 of chosen attributes are presented to the user by the browser (5), using a webpage sent by the server using the network protocol.

The user may now specify his preferences by evaluating the importance of product attributes. In this exemplary embodiment, product attributes are presented in a table by the user's browser, and the user can choose the importance value next to each attribute, represented as a certain number of "pluses" in 1 to 6 ordinal scale, wherein ties are allowed.

Wherein, a value of 1 is interpreted as the lowest importance, while a value of 6 - as the highest importance.

As shown in Fig. 3 "plus signs" are used as examples of product attribute importance visualization. However, other symbols may be used instead, for example stars. For each attribute (k=7), this step will obtain an importance of this attribute, $\alpha_i$, evaluated by the user on a scale.

After the user chooses importance values for each attribute of the chosen product type, the importance values are sent by the user's browser to the server using the network protocol. The server forwards the data to the preference elucidation module, which stores them in the database 3.

After steps A-C are completed, the user may carry out steps D-G multiple times, in order to carry out multiple product comparisons. In each comparison, different products may be used, as long as they are of the same type (for example, washing machines).

### Step D. choosing n>1 products j from the database 3 of the product type chosen in the step a),

In this example, 3 models of washing machines were chosen as products j to be compared, wherein n = 3. Note that the user can only select products of the same type (that have the same attributes used for comparison).

### Step E. Loading preset input data from preference elucidation module 1 to computation and visualization module 2

The preference elucidation module and computation and visualization module can exchange data directly using main memory, if implemented on a single host. Otherwise, they can communicate using sockets, database servers or using another interprocess communication method of the chosen technology.

### Step F. Preparation of product comparison matrix by the computation and visualization module 2 by retrieving a k by n matrix [i, j] of attribute values for each compared products j from the database

**Step G.** *Calculation of bars B_j by the computation and visualization module*

Step of calculation of product comparison is summarized in Fig. 4. In this non limiting example, the input data to the algorithm of computation and visualization module 2 consists of the following:

1) A list of $k>1$ attributes (herein k = 6) that are quantifiable on ordinal scale will be used to compare products. However, cardinal scale can also be used.
Regardless of the selected scale, for each scale, we need information on whether it is maximized (the more, the better), or minimized (the less, the better). For example: [("Energy efficiency", "max"), ("Water consumption", "min"), ("Noise level", "min"), ("Quick program", "max"), ("Washing capacity", "max"), ("Spin speed", "max")]
2) For each attribute $1 \leq i \leq k$, an importance of this attribute, $\alpha_i$, evaluated by the user on a scale of 1-6 (however a similar, cardinal scale, for example the Likert scale can be used). A value of 1 is interpreted as the lowest importance, while a value of 6 - as the highest importance
3) A list of $n$ (herein n = 3) products that will be compared by the user
4) A $k$ by $n$ matrix [i, j] of attribute values: for each product, a column in the matrix includes all k attribute values for this product, and a row in the matrix includes values a specific attribute for all n products
5) Width of the bars, s (herein s = 200 pixels)
6) Distance between bars, d (herein d = 100 pixels)
7) Width of the output window for displaying the bars: L (herein L = 800 pixels)

In this non limiting example, Algorithm comprises:

1) If $(s + d) * n > L$, then $$s = \frac{L}{n} - d$$ .
2) For each attribute, choose the products in the matrix that have the best values (highest or lowest, depending on scale):

For $1 \leq i \leq k$, $V_i = \{v: 1 \leq v \leq n$ and $\mathcal{M}$ [i, v] = $max_j(\mathcal{M}$ [i, j]) and scale i is maximized}
For $1 \leq i \leq k$, $V_i = \{v: 1 \leq v \leq n$ and $\mathcal{M}$ [i, v] = $min_j(\mathcal{M}$ [i, j]) and scale i is minimized}

3) For each product j, find the set of attributes i for which j is in $V_i$:
For $1 \leq j \leq n$, $S_j = \{i: 1 \leq i \leq k$ and $j \in V_i\}$
4) For each product j, determine the Smart Bar which is a set of blocks of sizes (x, y):

$B_j = \{(x, y): x = 3 * s, y = \alpha_i * s$ for each $i \in S_j\}$, wherein $S_j$ is the set of attributes i for which product j is the best among the compared products.

The following output data is provided by the computation and visualization module: bars, $B_j$, for each product j. Wherein for each product in the product comparison, the Bar is a set of blocks. Each block of the Bar corresponds to an attribute of the compared products and has a height that is determined by the importance of the attribute as chosen by the user. The Bar of each product is the set of blocks that correspond to the attributes for which this product is the best among the compared products. Thus, although in this exemplary embodiment x=3*s, generated bars can have a different width, such as 2*s or 2.5*s.

**Step H.** *Visualization of bars B_j by the computation and visualization module 2, server and the browser 5*

In this step, the computation and visualization module 2 creates a webpage in HTML that visualizes the bars $B_j$ by drawing them. An example layout of this webpage is provided in Fig. 6. As shown in Fig. 6, the attributes with their importance values are displayed on the left. In the center, the product comparison table is displayed with the attribute values of the chosen products j. On the right, bars are drawn in the following manner:

Drawing Bars requires the following additional input data: width of the bars, s; distance between bars, d; width of the output window for displaying the bars: L. This data may be provided by configuring the computation and visualization module.

For j from 1 to n, draw bars $B_j$ starting from the left side of the window, moving to the right. Keep distance d between bars of subsequent products. Each bar is drawn by drawing it's blocks as rectangles of width x and height y. The blocks are ordered by their height (y dimension), from highest to lowest. Blocks are drawn from the bottom of the window. Each subsequent block is drawn on top of the previous block. Each block of height $\alpha_i$ * $s$ will contain $\alpha_i$ plus signs of square shape (for example, height and width 0.8*s).

The server creates a webpage in HTML that contains the visualization of the Smart Bars, and sends the webpage to the browser 5. The browser displays the webpage, allowing the user to see the Smart Bars and to use them in product selection as shown in Fig. 6.

**Third Example**

***Analysis of the correctness of the choice of the best product with and without the use of decision support system and method of invention.***

In order to study the effectiveness of method and system according to invention, an intervention study for making multiattribute choices was applied. In the completed online study, an environment mimicking an online shopping platform was used.

*Participants of the study:*

A total of 240 people were subjected to the analysis. Participants were divided into two following groups of 120 people each:

- Control group - group choosing products without the use of decision support system and method of invention comprising participants divided into 40 young adults (19-31 years), 40 middle age users (42-53 years) and 40 older adults (65- 76 years);
- Smart Bars Intervention group - group choosing products with the use of decision support system and method of invention comprising participants divided into 40 young adults (19-31 years), 40 middle age users (42-53 years) and 40 older adults (65- 76 years);

*Study design:*

In the basic research paradigm, subjects made a series of choices of washing machines (one of three; n of products = 3) guided by the values of six attributes (k =6; e.g., energy class, spin speed, noise level, etc.). The choices were relatively simple (one washing machine was clearly better than the other two) or more complex, involving compensatory choices (the best washing machine was worse than the others on the most important attribute, but was clearly better than the others on the other attributes.

*Results:*

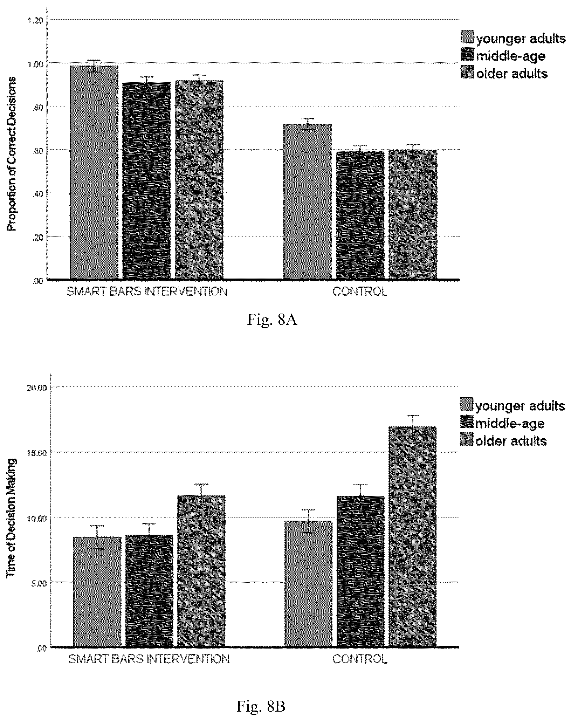

Obtained results are presented in Figs. 8A and 8B. The results of the comparative study systematically confirmed the prediction of a deterioration in the proportion of choices made due to age (the older the subjects, the worse the performance on the decision task) - as shown in Fig. 8A for the control group.

Moreover, in each age group, the level of performance on these tasks was significantly related to the capacity of visual working memory, while there were highly significant differences between the age groups in terms of working memory. Hence, a consistent mediation model was confirmed indicating that the effect of age on performing levels of multi-attribute decisions is mediated by visual working memory capacity. In addition, the time required to make a decision increased with the age of the test subjects (see control group on Fig. 8B).

The use of the method and system according to the invention produced the remarkable effect. Namely, Univariate Analysis of Variance yielded a statistically highly significant and strong increase [F( 1, 234) = 182.81, p < .001, $\eta_p^2$ = .439] in the correctness of the choices made by test group (see Fig. 8A), wherein said "correctness of choice" is defined as the selection of a product with characteristics that are important to the person making the choice. In addition, the use of the method according to the invention significantly reduced the time required to make a product selection decision (see Fig 8B).

Obtained results demonstrated that decision support method according to invention reduces the possibility of wrong product choice by 25%-30% (by 25% for younger customers and by over 30% for middle aged and older customers).

**Fourth Example**

This example shows the effect of different preferences on product choice.

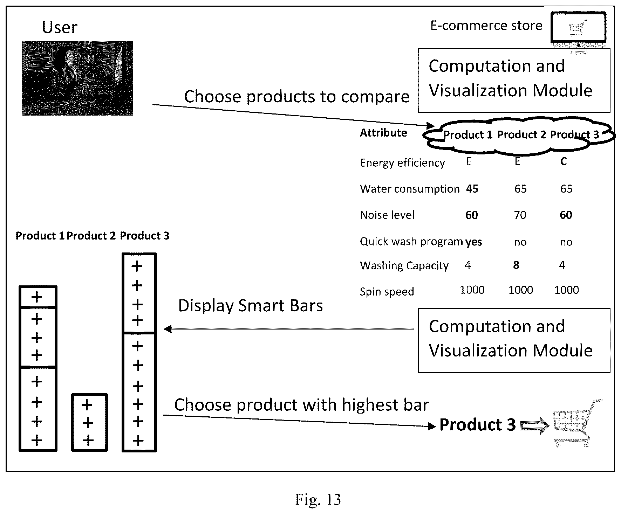

In this example, the compared products and their attribute values are identical as in Example 1. However, the attribute importance values (user preferences) are different. As shown in Fig. 12 and Fig. 13, the interaction of the user with the e-commerce store follows the same pattern as in Example 1. The user specifies her preferences. In Example 1, the attribute "Water consumption" had importance 5 and attribute "Quick wash program" had importance 4. In the current example, the attribute "Water consumption" has importance 3 and attribute "Quick wash program" had importance 1. The importance of the other attributes is identical in Example 1 and Example 4.

The e-commerce store displays the Smart Bars that have different heights than in Example 1. Because of the changed importance values for the two attributes, in the current example, product 3 has the highest Smart Bar and is chosen by the user. In Example 1, product 1 had the highest Smart Bar and was chosen by the user. The different product choice by the user is due to the differences in the interaction in the first stage of our method - the preference elucidation stage.

As described herein and the above examples, the system is particularly adapted for the comparison of physical products with physical attributes, such as appliances with particular energy usage or noise levels. However, in other embodiments, the system can be used to compare services in the physical world, such as vacations, with a mix of physical and non-physical attributes. For example, in Fig. 14, a screenshot is presented therein showing a comparison of hotels on the basis of objective requirements, such as price and distance to the beach, but also subjective elements, such as visitor ratings.

In summary, an embodiment of the invention relates to a computer-implemented, compensatory choice decision support method for choosing products with attributes most compelling to the user's preferences by producing a comparison of at least two products, each with at least k>1 attributes, the method is executed on a server-based system with a database connected via a network to a client host and browser, the method comprising following steps: a) choosing a type of products to be compared deposited within database (3); b) choosing a number of attributes to be compared from a list of k> 1 product attributes stored in the database (3), wherein said attributes are quantifiable on ordinal or cardinal scales; c) evaluating an importance $(\alpha_i)$ for each of product attribute $1 \leq i \leq k$ on an ordinal or cardinal scale; d) choosing n>1 products (j) from the database (3) of the product type chosen in the step a); e) loading preset input data from preference elucidation module (1) to computation and visualization module (2), wherein said input data comprises products (j) to be compared along with chosen attributes and designated importance $(\alpha_i)$; f) loading product comparison data by the computation and visualization module (2) by retrieving a k by n matrix $\mathcal{M}$ [i, j] of attribute values for each compared products (j) from the database (3), wherein said matrix (M) comprises all k attribute values for chosen product (j) and a row in the matrix (M) comprises values of specific attribute for all (n) compared products (j); g) calculation of bars $(B_j)$ for each compared product (j), wherein each bar $(B_j)$ of a product (j) is a set of blocks that correspond to the attributes for which the product (j) has the best values among all compared products, wherein each block in the bar $(B_j)$ has two dimensions: width (x) and height (y), wherein the height (y) of the block is determined by the importance value of the corresponding attribute $(\alpha_i)$ and wherein the smallest (y) value corresponds to the lowest importance of attribute and highest (y) value corresponds to the highest importance of attribute; h) generating a visualization of product comparison in the form of bars $(B_j)$ in the output window and presenting it to the user; wherein each bar $(B_j)$ is a set of blocks, each drawn subsequent on top of previous block; wherein the height of each bar $(B_j)$ consists of sum of attribute importance values. Invention also relates to a decision support system for performing a compensatory choice decision support method for choosing products with attributes most compelling to the user's preferences according to invention.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. While the dimensions and types of materials described herein are intended to define the parameters of the invention, they are by no means limiting, but are instead exemplary embodiments. Many other embodiments will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the terms "comprising" and "wherein." Moreover, in the following claims, the terms "first," "second," and "third," are used merely as labels, and are not intended to impose numerical requirements on their objects. Further, the limitations of the following claims are not written in means-plus-function format and are not intended to be interpreted based on 35 U.S.C. § 112, sixth paragraph, unless and until such claim limitations expressly use the phrase "means for" followed by a statement of function void of further structure.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," "more than" and the like include the number recited and refer to ranges which can be subsequently broken down into subranges as discussed above. In the same manner, all ratios disclosed herein also include all subratios falling within the broader ratio.

One skilled in the art will also readily recognize that where members are grouped together in a common manner, such as in a Markush group, the present invention encompasses not only the entire group listed as a whole, but each member of the group individually and all possible subgroups of the main group. Accordingly, for all purposes, the present invention encompasses not only the main group, but also the main group absent one or more of the group members. The present invention also envisages the explicit exclusion of one or more of any of the group members in the claimed invention.

## Claims

1. A computer-implemented, compensatory choice visual decision support method for comparing products or services with attributes most compelling to a user's preferences by producing a comparison of at least two products, each with at least one attribute, the method comprising following steps:

   a) choosing a type of products to be compared deposited within database;
   b) choosing a number of attributes to be compared from a list of product attributes stored in the database, wherein said attributes are quantifiable on ordinal or cardinal scales;
   c) evaluating an importance for each of product attribute on an ordinal or cardinal scale;
   d) choosing at least one product from the database of the product type chosen in the step a);
   e) loading preset input data from preference elucidation module to computation and visualization module, wherein said input data comprises products to be compared along with chosen attributes and designated importance;
   f) loading product comparison data by the computation and visualization module by retrieving a matrix of attribute values for each compared products from the database, wherein said matrix comprises all attribute values for chosen product and a row in the matrix comprises values of specific attribute for all compared products;
   g) calculation of bars for each compared product;

   wherein each bar of a product comprises a set of blocks that correspond to the attributes for which the product has best values among all compared products, wherein each block in the bar has two dimensions: width and height;
   wherein the height of the block is determined by the importance value of the corresponding attribute and wherein a smallest height value corresponds to a lowest importance of attribute and a highest height value corresponds to the highest importance of attribute; and

   h) generating a visualization of product comparison in form of bars in at least one output window and presenting it to the user;

   wherein each bar is a set of blocks, each drawn subsequent on top of previous block;
   wherein the height of each bar consists of sum of attribute importance values.

2. The computer-implemented, compensatory choice decision support method according to claim 1, wherein said scale is an ordinal 6 points scale wherein, a value of 1 is interpreted as the lowest importance, while a value of 6 as the highest importance.

3. The computer-implemented, compensatory choice decision support method according to claim 1 further comprising step c') which comprises storing the importance values for each attribute in the database.

4. The computer-implemented, compensatory choice decision support method according to claim 1, wherein step c) the chosen importance values are visualized and presented to the user in the form of blocks of different sizes.

5. The computer-implemented, compensatory choice decision support method according to claim 1, wherein for each product bar is determined by a set of blocks of sizes of (x, y), wherein: $B_j = \{(x,y): x = 3 * s, y = \alpha_i * s \text{ for each } i \in S_j\}$, wherein j is product index, $B_j$ is the calculated bar value having a width x and height y for a given product j, $S_j$ is a set of attributes i for which product j is the best among the compared products, $\alpha_i$ is the importance value for each attribute i.

6. The computer-implemented, compensatory choice decision support method according to claim 1, wherein said blocks are drawn one on another from a bottom of the output window.

7. The computer-implemented, compensatory choice decision support method according to claim 1, wherein in step d) an additional input data is loaded to computation and visualization module, wherein said additional input data comprises width of the bars, distance between bars and width of the output window for displaying the bars.

8. The computer-implemented decision support method according to claim 7, wherein product comparison in step f) is calculated by following formula:
for each attribute, choose the products in the matrix which have the best values:

for $1 \leq i \leq k$, $V_i = \{v: 1 \leq v \leq n$ and $\mathcal{M}[i, v] = max_j(\mathcal{M}[i, j])$ and scale i is maximized$\}$
for $1 \leq i \leq k$, $V_L = \{v: 1 \leq v \leq n$ and $\mathcal{M}[i, v] = min_j(\mathcal{M}[i, j])$ and scale i is minimized$\}$
for each product (j), find a set of attributes i for which (j) is in $V_i$;
for $1 \leq j \leq n$, $S_j = \{i: 1 \leq i \leq k$ and $j \in V_i\}$
for each product (j), determine a Bar ($B_j$) which is a set of blocks of sizes width (x) and
height (y): $B_j = \{(x, y): x = 3 * s, y = \alpha_i * s$ for each $i \in S_j\}$,
wherein k is total number of attributes, $B_j$ is calculated bar value having a width x and
a height y for given product j, $S_j$ is the set of attributes i for which product j is the best among the compared products, $\alpha_i$ is the importance value for each attribute i.

9. The computer-implemented, compensatory choice decision support method according to claim 1, wherein in step h) the visualization of product comparison in the form of bars is generated in the output window further comprises additional data comprising attribute name, attribute importance level, numerical data of parameter chosen as attribute to be compared, text data describing the parameter chosen as attribute to be compared, combination thereof.

10. The computer-implemented, compensatory choice decision support method according to claim 9, wherein said additional data are presented to the user in a table.

11. The computer-implemented, compensatory choice decision support method according to claim 1, wherein the method is executed on a server-based system with a database connected via a network to a client host and browser.

12. A decision support system for performing a compensatory choice decision support method for choosing products with attributes most compelling to a user's preferences by producing a comparison of at least two products, each with at least one attribute, wherein said system is connected with a database to a client host and browser via network, comprising web server, preference elucidation module and computation and visualization module, wherein:

a database is configured for storing an underlying dataset comprising plurality of data on products, product attributes, product attributes importance;
a browser is configured to display products, attribute values and bars obtained from the server and allow users to interactively choose products and attribute importance values, communicating user choices to the server ;
server is configured to communicate with the browser using a network protocol and to use the preference elucidation module and the computation and visualization module in order to prepare appropriate responses in form of a message containing data and metadata conforming to an agreed format to be communicated to the browser;
preference elucidation module is configured to interactively obtain an evaluation of importance of the product attributes on a scale from the user, and to store this data in the database; and
computation and visualization module is configured to calculate the bars used in product comparison, generate a visualization of bars used in product comparison.

EP 4 553 744 A1

| Product | | Bosch Serie 6 9kg Front Load Washing Machine WGA244U0AU $998 $501 off RRP of $1,499 | Add to Cart | Bosch Serie 4 8kg Front Loader Washing Machine WAN24121AU $842 $207 off RRP of $1,049 | Add to Cart | Bosch Serie 8 10kg Front Load Washing Machine WAX32M41AU $2,007 $492 off RRP of $2,499 | Add to Cart |
|---|---|---|---|---|---|---|---|
| Washing capacity | | 9 kg | | 8 kg | | 10 kg | |
| Spin Speed | | 1400 RPM | | 1200 RPM | | 1600 RPM | |
| Weight (kg) | | 73.3 Kg | | 69.5 Kg | | 81.9 Kg | |
| Accessories included | | 1 x 1500mm Inlet Hose, 1 x 1500mm Drain Outlet Hose. | | 1 x 1500mm Cold Water Inlet Hose, 1 x 1500mm Drain Outlet Hose. | | 1 x 1500mm Inlet Hose, 1 x 1500 Drain Outlet Hose. | |

Fig. 1A

Prior art

Fig. 1B

Fig. 2

| Attribute | Importance |
|---|---|
| Energy efficiency | + + + + + + |
| Water consumption | + + + + + |
| Noise level | + + + + |
| Quick wash program | + + + + |
| Washing Capacity | + + + |
| Spin speed | + + |

Fig. 3

Input: A list of $k>1$ attributes; A list of $n>1$ products

Input: importance of attributes, $\alpha_i \epsilon \{1,2,3,4,5,6\}$ for $1 \leq i \leq k$

Input: $k$ by $n$ matrix $\mathcal{M}[i,j]$ of attribute values

Input: Width of the bars, $s$; Distance between bars, $d$; Width of the output window for displaying the bars: L

For $1 \leq i \leq k$, if scale i is maximized,
$$V_i = \{v: 1 \leq v \leq n \text{ and } \mathcal{M}[i,v] = max_j(\mathcal{M}[i,j])\}$$
For $1 \leq i \leq k$, if scale i is minimized,
$$V_i = \{v: 1 \leq v \leq n \text{ and } \mathcal{M}[i,v] = min_j(\mathcal{M}[i,j])\}$$

If $(s + d) * n > L$

For $1 \leq j \leq n, S_j = \{i: 1 \leq i \leq k \text{ and } j\epsilon V_i\}$

$$s = \frac{L}{n} - d$$

$$B_j = \{(x,y): x = 3 * s, y = \alpha_i * s \text{ for each } i \in S_j\}$$

For j from 1 to n, draw Bars $B_j$ starting from the left side of the window, moving to the right. Keep distance d between bars of subsequent products.

Each Bar is drawn by drawing it's blocks as rectangles of size (x, y). The blocks are ordered by their height (y dimension), from highest to lowest. Blocks are drawn from the bottom of the window. Each subsequent block is drawn on top of the previous block. Each block of height $\alpha_i * s$ will contain $\alpha_i$ plus signs of square shape (height and width 0.8*s).

Output: dimensions of Bars
$$B_j = \{(x,y): x = 3 * s, y = \alpha_i * s \text{ for each } i \in S_j\};$$
drawing of Bars

Fig. 4

Fig. 5

| Attribute | Importance | Product 1 | Product 2 | Product 3 | Product 1 | Product 2 | Product 3 |
|---|---|---|---|---|---|---|---|
| Energy efficiency | + + + + + + | E | E | C | | | |
| Water consumption | + + + + + | 45 | 65 | 65 | | | |
| Noise level | + + + + | 60 | 70 | 60 | | | |
| Quick wash program | + + + + | yes | no | no | | | |
| Washing Capacity | + + + | 4 | 8 | 4 | | | |
| Spin speed | + + | 1000 | 1000 | 1000 | | | |

Fig. 6

Product 1 | + + + + + | + + + + | + + + +

Noise level: 60DB

Product 3 | + + + + + + | + + + +

Product 2 | + + +

Fig. 7

Fig. 8A

Fig. 8B

User

Choose product type

Preference
Elucidation
Module

Show product attributes

„Energy efficiency" rates 6

E-commerce
store

| Energy efficiency | + + + + + + |
| Water consumption | + + + + + |
| Noise level | + + + + |
| Quick wash program | + + + + |
| Washing Capacity | + + + |
| Spin speed | + + |

„Water consumption" rates 5

„Noise level" rates 4

„Quick wash program" rates

„Washing capacity" rates 3

„Spin speed" rates 2

Fig. 9

User

E-commerce store

Computation and
Visualization Module

Choose products to compare

| Attribute | Product 1 | Product 2 | Product 3 |
|---|---|---|---|
| Energy efficiency | E | E | C |
| Water consumption | 45 | 65 | 65 |
| Noise level | 60 | 70 | 60 |
| Quick wash program | yes | no | no |
| Washing Capacity | 4 | 8 | 4 |
| Spin speed | 1000 | 1000 | 1000 |

Product 1  Product 2  Product 3

Display Smart Bars

Computation and
Visualization Module

Choose product with highest bar

Product 1

Fig. 10

Fig. 11

Fig. 12

User

E-commerce store

Computation and
Visualization Module

Choose products to compare

| Attribute | Product 1 | Product 2 | Product 3 |
|---|---|---|---|
| Energy efficiency | E | E | C |
| Water consumption | 45 | 65 | 65 |
| Noise level | 60 | 70 | 60 |
| Quick wash program | yes | no | no |
| Washing Capacity | 4 | 8 | 4 |
| Spin speed | 1000 | 1000 | 1000 |

Product 1 Product 2 Product 3

Display Smart Bars

Computation and
Visualization Module

Choose product with highest bar

Product 3

Fig. 13

Fig. 14

Europäisches
Patentamt

European
Patent Office

Office européen
des brevets

# EUROPEAN SEARCH REPORT

**Application Number**

EP 24 21 1894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 983 220 A (SCHMITT MARTIN [US]) 9 November 1999 (1999-11-09) * abstract * * column 1, line 16 - column 4, line 65 * * column 6, line 1 - column 24, line 38 * * claims 1-8; figures 1-26 * | 1-12 | INV. G06Q30/0282 G06Q30/0601 |
| A | SONG ET AL: "The effects of incorporating compensatory choice strategies in Web-based consumer decision support systems", DECISION SUPPORT SYSTEMS, ELSEVIER, AMSTERDAM, NL, vol. 43, no. 2, 10 February 2007 (2007-02-10), pages 359-374, XP005744865, ISSN: 0167-9236, DOI: 10.1016/J.DSS.2006.10.007 * the whole document * | 1-12 | |
| A | US 2012/330778 A1 (EASTHAM GARRETT [US]) 27 December 2012 (2012-12-27) * abstract * * paragraph [0001] - paragraph [0010] * * paragraph [0024] - paragraph [0115] * * claims 1-30, 52, 66; figures 1-12 * | 1-12 | **TECHNICAL FIELDS SEARCHED (IPC)** G06Q |

The present search report has been drawn up for all claims

| Place of search | Date of completion of the search | Examiner |
|---|---|---|
| The Hague | 14 January 2025 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1894

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| US 5983220 | A | 09-11-1999 | US | 5983220 A | 09-11-1999 |
| | | | US | 6463431 B1 | 08-10-2002 |
| US 2012330778 | A1 | 27-12-2012 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0175729 A2
- KR 20130065820 A
- JP 2016170738 A

**Non-patent literature cited in the description**

- **HÄUBL, G** ; **TRIFTS, V**. Consumer decision making in online shopping environments: The effects of interactive decision aids. *Marketing Science*, 2000, vol. 19 (1), 4-21
- **MORAN, K.** Comparison tables for product, services, and features. *Nielsen Norman Group*, 2017
- **RYDZEWSKA, K.** ; **PAWLOWSKA, J.** ; **NIELEK, R** ; **WIERZBICKI, A.** ; **SEDEK, G.** Cognitive limitations of older e-commerce customers in product comparisons tasks.. *IFIP TC13 Conference on Human-Computer Interaction [Interact], Proceedings, Part III*, 2021, 646-656
- **SONG, J.** ; **JONES, D.** ; **GUDIGANTALA, N.** The effects of incorporating compensatory choice strategies in Web-based consumer decision support systems.. *Decision Support Systems*, 2007, vol. 43 (2), 359-374